# EUROPÄISCHE PATENTSCHRIFT

(11) **EP 1 470 857 B1**
(45) Veröffentlichungstag und Bekanntmachung des Hinweises auf die Patenterteilung: **06.06.2007**
(21) Anmeldenummer: 04008584.7
(22) Anmeldetag: 08.04.2004
(51) Int. Cl.: B01J 2/00, B01J 2/16, B01J 8/38, B08B 5/00

(54) **Verfahren und Vorrichtung zum Behandeln eines partikelförmigen Guts**
Process and device for treating material in particle form
Procédé et dispositif pour traiter du matériel en forme de particules

(30) Priorität: 14.04.2003 DE 10318302
(43) Veröffentlichungstag der Anmeldung: 27.10.2004
(73) Patentinhaber: Hüttlin, Herbert, Dr. h.c., 79539 Lörrach (DE)
(72) Erfinder: Hüttlin, Herbert, Dr. h.c., 79539 Lörrach (DE)
(74) Vertreter: Heuckeroth, Volker

(56) Entgegenhaltungen:
- WO-A-00/10699
- WO-A-00/16887
- DE-A1- 4 406 685
- DE-A1- 10 104 184
- US-A- 4 587 744

## Beschreibung

Die Erfindung betrifft ein Verfahren zum Behandeln eines partikelförmigen Guts, bei dem das Gut in einem Behälter, der einen Boden, eine hochstehende, sich von unten nach oben erweiternde Wand und im oberen Bereich ein sich an die Wand anschließendes Umlenkelement aufweist, in einer fortlaufenden Umwälzbewegung entlang des Bodens zur Wand und durch Rotation der Wand um eine vertikale Drehachse entlang der Wand nach oben bewegt und am Umlenkelement so umgelenkt wird, dass es zum Boden zurückgelangen kann.

Die Erfindung betrifft ferner eine Vorrichtung zum Behandeln eines partikelförmigen Guts, mit einem Behälter, der einen Boden, eine hochstehende, sich von unten nach oben erweiternde Wand und in einem oberen Bereich ein Umlenkelement aufweist, um das entlang der Wand nach oben bewegte Gut in seiner Bewegungsrichtung so umzulenken, dass es wieder zum Boden zurückgelangen kann, wobei die Wand um eine vertikale Drehachse in Rotation antreibbar ist.

Ein Verfahren und eine Vorrichtung der eingangs genannten Art sind aus der WO 00/10699 bekannt.

Dort ist eine Vorrichtung zum Behandeln eines partikelförmigen Guts mit einem Überzugsmedium, insbesondere zum Beschichten von Arznei-, Lebenmittel-, technischen oder chemischen Formlingen beschrieben.

Ein Verfahren und eine Vorrichtung der eingangs genannten Art werden beispielsweise in der pharmazeutischen, chemischen, Süßwaren- oder Lebensmittelindustrie verwendet. In der pharmazeutischen Industrie werden durch Dragieren Arzneiformen hergestellt, die mit einem Zuckersirup überzogen sind. Durch Filmbeschichten, oder auch Filmcoating genannt, werden Film- oder Lacktabletten hergestellt, worunter man mit einem Polymer überzogene Arzneiformen versteht.

Bei der bekannten Vorrichtung und dem bekannten Verfahren wird das partikelförmige Gut in den Behälter eingefüllt und durch Rotation der Wand des Behälters in einer fortlaufenden Umwälzbewegung entlang des Bodens und der hochstehenden rotierenden Behälterwand von einem unteren Bereich in einen oberen Bereich des Behälters bewegt, im oberen Bereich des Behälters durch ein Umlenkelement umgelenkt und entlang einer inneren, von der ersten Behälterwand radial beabstandeten Rückführfläche wieder zu dem ebenfalls rotierenden Boden des Behälters zurückbewegt.

Das Umlenkelement, das mit einer Mehrzahl von Leitschaufeln versehen ist, ist mit der Behälterwand fest verbunden und dreht sich entsprechend mit gleicher Drehgeschwindigkeit mit der Wand des Behälters mit.

Eine weitere Vorrichtung der gattungsgemäßen Art ist aus der DE 101 04 184 A1 bekannt. Von der zuvor beschriebenen bekannten Vorrichtung unterscheidet sich diese dadurch, dass die Rückführfläche zum Zurückführen des partikelförmigen Guts zum Boden des Behälters außerhalb der in Rotation versetzbaren hochstehenden Wand des Behälters angeordnet ist. Auch der Behälter dieser bekannten Vorrichtung weist in seinem oberen Bereich ein Umlenkelement auf, um das durch Rotation der hochstehenden Wand entlang der Wand nach oben steigende Gut in seiner Bewegung so umzulenken, dass es entlang der radial außerhalb angeordneten Rückführfläche zum Boden des Behälters zurückgelangen kann. Bei dieser bekannten Vorrichtung ist das Umlenkelement statisch, d.h. es dreht sich während der Umwälzbewegung des partikelförmigen Guts nicht mit.

Ferner offenbart die WO 00/16887 eine Vorrichtung zur Trocknung schüttfähiger Produkte, mit einer Rotorkammer, in der ein um eine vertikale Drehachse rotierender Behälter angeordnet ist, wobei der Behälter eine zentrische horizontale Fläche und zumindest in seinem radial äußeren Drittel eine Kegelmantel aufweist, wobei der Kegelmantel zumindest teilweise flächige Gasdurchlässe in Form von Lochungen oder Sieben aufweist. Durch die Gasdurchlässe in dem Kegelmantel wird den zu trocknenden Produkten während deren radial-peripheren Umwälzung flächig ein Trockengas zugeführt, ohne dass diese dabei aufgewirbelt werden und unzulässigen Druck-, Stoß- und/oder Reibbelastungen ausgesetzt werden. Oberhalb des die Wand des Behälters bildenden Kegelmantels befindet sich ein Umlenkelement, das mit Leitschaufeln versehen ist, die die Form eines Segments einer Spirale aufweisen.

Die bekannten Vorrichtungen und Verfahren eignen sich nachteiligerweise nur zur Behandlung von solchem Gut, das aus relativ großen Partikeln besteht, beispielsweise von Tablettenformlingen und dergleichen. Die bekannten Vorrichtungen und Verfahren sind weniger zur Behandlung von Gut geeignet, das aus sehr kleinen Partikeln besteht, beispielsweise Pellets. Insbesondere bei der Bewegung der Partikel des Guts entlang des Umlenkelements wirken auf die Partikel hohe Bremskräfte ein, die eine entsprechend abrasive Wirkung auf die Partikel haben. Bei besonders kleinen Partikeln kann dies schnell zur Zerstörung der Partikel führen. Andererseits kann es bei kleinen Partikeln vorkommen, dass sie aufgrund ihrer geringen Masse und damit geringen kinetischen Energie, die sie aufgrund ihrer zentrifugalen aufwärts gerichteten Bewegung durch die Rotation der Wand des Behälters aufnehmen können, am Umlenkelement nicht sicher umgelenkt werden.

Das Einblasen von Luft durch eine Perforation in der rotierenden Wand des Behälters, wie bei der Vorrichtung und dem Verfahren gemäß der zuvor genannten WO 00/16887 ist für die Behandlung eines Guts aus sehr kleinen Partikeln ebenfalls nicht geeignet, da die Perforationsränder der Perforationen einerseits ebenfalls abrasiv wirken, und andererseits eine Luftzuführung mit einem entsprechenden Druck erforderlich ist, um zu vermeiden, dass die kleinen Partikel durch die Perforationen aus dem Behälter während ihrer Behandlung entweichen. Eine Erhöhung des Einblasdrucks würde automatisch eine deutliche Erhöhung der Prozessluftmenge nach sich ziehen und die Partikel verwirbeln, was aber bei dieser Art des Verfahrens gerade nicht erwünscht ist. Entsprechend müssten die Perforationen sehr klein im Durchmesser ausgebildet werden, wodurch jedoch nicht ausreichend Luft in den Behälter zugeführt werden kann, insbesondere um die Partikel einer Behandlung mit einem feuchten Überzugsmedium ausreichend zu trocknen.

Aus diesen Gründen werden Pellets derzeit nahezu ausschließlich in sogenannten Wirbelschichtapparaturen hergestellt bzw. behandelt, bei denen das Gut durch eine Luftzufuhr vom Boden des Behälters aus aufgewirbelt wird, nicht jedoch aufgrund einer zentrifugalen Bewegung durch eine Rotation der Behälterwand umgewälzt wird.

Der Erfindung liegt daher die Aufgabe zugrunde, ein Verfahren und eine Vorrichtung der eingangs genannten Art dahingehend weiterzubilden, dass sie nicht nur zur Behandlung von großpartikeligem Gut, sondern auch von kleinpartikeligem Gut geeignet sind.

Erfindungsgemäß wird diese Aufgabe hinsichtlich des eingangs genannten Verfahrens dadurch gelöst, dass das Gut entlang des Umlenkelements mittels eines Luftstroms bewegt wird, der durch zumindest einen Luftspalt im Übergangsbereich von der Wand zum Umlenkelement im Wesentlichen von unten nach oben und im sich an den Luftspalt anschließenden Bereich im Wesentlichen tangential zum Verlauf der Wand und/oder des Umlenkelements eingeleitet wird.

Hinsichtlich der eingangs genannten Vorrichtung wird die Aufgabe dadurch gelöst, dass im Übergangsbereich von der Wand zum Umlenkelement zumindest ein erster Luftspalt vorhanden ist, und dass eine Luftzuführeinrichtung zum Zuführen eines Luftstroms vorhanden ist, wobei der erste Luftspalt und/oder die Luftzuführeinrichtung so ausgebildet ist, dass der durch den Luftspalt eingeleitete Luftstrom eine im Wesentlichen von unten nach oben und im sich an den Luftspalt anschließenden Bereich im Wesentlichen tangential zum Verlauf der Wand und/oder des Umlenkelements gerichtete Strömungskomponente aufweist.

Der durch den zumindest einen Luftspalt eingeleitete Luftstrom erzeugt auf der Gleitfläche des Umlenkelements einen Luftfilm bzw. ein Luftkissen, auf dem die Partikel des Guts mit wesentlich verringerter Reibung oder sogar reibungsfrei entlang des Umlenkelements bewegt werden. Darüber hinaus führt der durch den zumindest einen Luftspalt eingeleitete Luftstrom insbesondere kleinen Partikeln eine ausreichende kinetische Energie zu, damit diese am Umlenkelement sicher umgelenkt werden. Die Umlenkung des Guts am Umlenkelement ist mit anderen Worten pneumatisch unterstützt. Der eingeleitete Luftstrom verhindert außerdem, dass die Partikel durch den Luftspalt aus dem Behälter während ihrer Behandlung entweichen können. Ein weiterer zusätzlicher Vorteil der erfindungsgemäßen Ausgestaltung der Vorrichtung des Verfahrens besteht darin, dass die durch den zumindest einen Luftspalt eingeleitete Luft, im Fall, dass die Partikel des Guts mit einem feuchten Überzugsmedium behandelt werden, gleichzeitig zum Trocknen der Partikel genutzt werden kann. Bei dieser Ausgestaltung kann auf eine Perforation der rotierenden Wand, wie sie im Stand der Technik vorgesehen ist, vollständig verzichtet werden, die einer Behandlung von kleinpartikeligem Gut abträglich sein kann.

Der zumindest eine Luftspalt erstreckt sich vorzugsweise unterbrochen oder ununterbrochen über einen vollen Umfang des Behälters und der Luftstrom wird dann vorzugsweise vollumfänglich durch den Luftspalt eingeleitet.

In einer bevorzugten Ausgestaltung des Verfahrens wird der Luftspalt zumindest mit einer Strömungskomponente durch den zumindest einen Luftspalt eingeleitet, die sich entlang einer Mantellinie der Wand bzw. des sich anschließenden Umlenkelements erstreckt.

Bei dieser Ausgestaltung kann der Luftstrom außer einer nach oben gerichteten Strömungskomponente zusätzlich eine in Umfangsrichtung des Behälters gerichtete Strömungskomponente aufweisen, die vorzugsweise in Drehrichtung der Wand des Behälters orientiert ist. Hierdurch kann vorteilhafterweise die sich durch die Rotation der Wand des Behälters einstellende Bewegungskomponente der Partikel in Umfangsrichtung durch den Luftstrom aufgenommen und beibehalten, verstärkt oder allmählich verlangsamt werden kann.

In einer weiteren bevorzugten Ausgestaltung des Verfahrens wird der Luftstrom ausschließlich mit einer Strömungskomponente durch den zumindest einen Luftspalt eingeleitet, die sich entlang einer Mantellinie der Wand bzw. des sich anschließenden Umlenkelements erstreckt.

Hierbei ist von Vorteil, dass an dem Umlenkelement auf Leitschaufeln verzichtet werden kann, wie sie im Stand der Technik vorgesehen sind, um die Partikel in eine nach unten gerichtete Bewegung umzulenken, weil sich die Partikel durch den Luftstrom nicht aufgrund einer umfänglichen Bewegungskomponente in der konkaven Wölbung des Umlenkelements ansammeln und in einer Umfangsbewegung am Umlenkelement verharren können. Vom Ende des Umlenkelements, das von der Wand des Behälters abgewandt ist, fallen die Partikel dann im Wesentlichen ohne Bewegungskomponente in Umfangsrichtung des Behälters von dem Umlenkelement in Richtung zum Boden hin ab.

In einer weiteren Ausgestaltung des Verfahrens wird der Luftstrom, bevor das Gut das Ende des Umlenkelements erreicht, zumindest teilweise nach oben aus dem Behälter abgeführt.

Hierbei ist von Vorteil, dass der entlang dem Umlenkelement strömende Luftstrom zumindest nicht vollständig nach unten abgelenkt wird und somit nicht in das Innere des Behälters gelangen kann, wo er beispielsweise andere Prozessluftströmungen oder beispielsweise einen Sprühnebel, mit dem beispielsweise ein Überzugsmedium auf die Partikel aufgesprüht wird, beeinträchtigt.

In einer weiteren bevorzugten Ausgestaltung des Verfahrens wird das Gut entlang des Bodens mittels eines weiteren Luftstroms bewegt, der durch zumindest einen Luftspalt im Boden von unten und mit im Wesentlichen tangential zum Boden verlaufender und zur Wand hin gerichteter Strömungskomponente in den Behälter eingeleitet wird.

Hierbei ist von Vorteil, dass die Partikelbewegung auch entlang des Bodens mittels eines gerichteten Luftstroms bewirkt werden kann, wodurch der Boden vorzugsweise statisch ausgebildet werden kann, d.h. der Boden braucht in diesem Fall nicht mit der Wand des Behälters mitzudrehen, um die Partikel auf dem Boden zur Wand hin zu bewegen. Außerdem kann der durch den Boden eingeleitete Luftstrom, wenn das Gut mit einem feuchten Überzugsmedium behandelt wird, zum Trocknen der Partikel genutzt werden. Des Weiteren hat die tangentiale Einleitung des Luftstroms in den Bodenbereich des Behälters den Vorteil, dass der Luftstrom luftempfindliche Behandlungsvorgänge, wie beispielsweise das Besprühen der Partikel mit einem feuchten Überzugsmedium oberhalb des Bodens nicht beeinträchtigt.

In einer weiteren bevorzugten Ausgestaltung des Verfahrens wird das Gut mit einem feuchten Überzugsmedium besprüht, das auf das Gut in Form eines ringförmigen Sprühnebels aufgesprüht wird, bevor das Gut auf den Boden zurückgelangt, und der Sprühnebel wird mit einem von oben nach unten gerichteten Luftstrom so beaufschlagt, dass der Sprühnebel im Wesentlichen horizontal gerichtet ist.

Diese Maßnahme hat den Vorteil, dass gewährleistet ist, dass sich der Sprühnebel in einem Umfangswinkel von 360° um die Düse herum ausbildet, indem der von oben zugeführte Luftstrom einen fladenartig austretenden Luftfilm über dem Sprühnebel bzw. Sprühschirm bildet.

In einer weiteren bevorzugten Ausgestaltung der Vorrichtung ist im Übergangsbereich von der Wand zum Umlenkelement zumindest ein zweiter Luftspalt vorhanden, der von dem ersten Luftspalt vertikal beabstandet ist, wobei der zweite Luftspalt und/oder die Luftzuführeinrichtung so ausgebildet ist, dass ein von der Luftzuführeinrichtung zugeführter Luftstrom eine im Wesentlichen von unten nach oben und im sich an den Luftspalt anschließenden Bereich im Wesentlichen tangential zum Verlauf der Wand und/oder des Umlenkelements gerichtete Strömungskomponente aufweist.

Durch das Vorsehen zumindest zweier Luftspalte im Übergangsbereich von der Wand zum Umlenkelement können die vorteilhaften Wirkungen, die bereits im Zusammenhang mit dem zumindest einen Luftspalt zuvor beschrieben wurden, noch verstärkt werden. Beispielsweise kann die Wirkung der beiden Luftströme auf das entlang dem Umlenkelement zu bewegende Gut unterschiedlich sein, indem beispielsweise der in Bewegungsrichtung des Guts erste Luftstrom stärker ist als der zweite Luftstrom, um bei großen Behältern und großen Partikeln, bei denen die Partikel am oberen Ende der rotierenden Wand eine hohe kinetische Energie besitzen, die Partikel langsam abzubremsen, und zwar durch den Luftstrom selbst, ohne einer hohen Reibung am Umlenkelement zu unterliegen.

In einer weiteren bevorzugten Ausgestaltung der Vorrichtung weist die Luftzuführeinrichtung einen ersten Zufuhrkanal zum Zuführen eines ersten Luftstroms zu dem ersten Luftspalt und zumindest einen von dem ersten Zufuhrkanal getrennten zweiten Zufuhrkanal zum Zuführen eines zweiten Luftstroms zu dem zumindest zweiten Luftspalt auf.

Wenn mehrere Luftspalte vorgesehen sind, hat diese Maßnahme den Vorteil, dass jeder der zu den Luftspalten zugeführte Luftstrom unabhängig voneinander eingestellt werden kann, beispielsweise hinsichtlich der Luftmenge und des Strömungsdruckes.

In einer weiteren bevorzugten Ausgestaltung der Vorrichtung weist das Umlenkelement einen ersten Abschnitt auf, der sich unmittelbar an die Wand anschließt, wobei der erste Luftspalt zwischen einem oberen Ende der Wand und einem unteren Ende des ersten Abschnitts vorhanden ist.

Hierbei ist von Vorteil, dass sich der durch den zumindest einen Luftspalt zugeführte Luftstrom nur entlang des Umlenkelements ausbildet, nicht jedoch entlang dem oberen Bereich der rotierenden Wand, so dass die Kinematik der Partikel im oberen Bereich der Wand allein durch deren Rotation bestimmt ist.

Dabei ist weiterhin bevorzugt, wenn sich der erste Abschnitt von unten nach oben mit einer die Form der Wand im Bereich deren oberen Endes aufnehmenden Form erweitert.

Hierbei ist von Vorteil, dass der durch den zumindest einen Luftspalt eingeleitete Luftstrom die Bewegung des Guts aufnimmt, ohne dass dieses einer abrupten Richtungsänderung unterworfen wird. Dadurch werden Belastungen der Partikel beim Übergang von der rotierenden Wand auf das Umlenkelement vermieden.

In einer weiteren bevorzugten Ausgestaltung dreht sich der erste Abschnitt des Umlenkelements nicht mit der Wand mit.

Ein Mitdrehen des Umlenkelements mit der rotierenden Wand ist aufgrund des durch den zumindest einen Luftspalt eingeleiteten Luftstroms auch nicht erforderlich, um eine übermäßige Bremswirkung auf das partikelförmige Gut und einer damit einhergehenden erhöhten Abrasion zu vermeiden. Gleichzeitig kann durch den statischen ersten Abschnitt auf einen Drehantrieb für diesen Abschnitt verzichtet werden, was die Konstruktion der erfindungsgemäßen Vorrichtung vereinfacht und damit die Herstellungskosten senkt.

In einer weiteren bevorzugten Ausgestaltung der Vorrichtung weist das Umlenkelement zumindest einen zweiten Abschnitt auf, wobei der zweite Luftspalt zwischen einem oberen Ende des ersten Abschnitts und einem unteren Ende des zweiten Abschnitts angeordnet ist.

Mit dieser Ausgestaltung wird auf konstruktiv vorteilhaft einfache Weise ein zweiter Luftspalt zusätzlich zu dem ersten Luftspalt realisiert. Das Umlenkelement kann auch mehr als zwei Abschnitte aufweisen, wenn entsprechend mehr Luftspalte vorgesehen werden sollen, insbesondere bei groß bauenden Vorrichtungen, bei denen das Umlenkelement eine entsprechende Größe besitzt.

Dabei ist es weiterhin bevorzugt, wenn der zweite Abschnitt von der Behältermitte aus gesehen konkav gewölbt ist, und wenn ein unteres Ende des zweiten Abschnitts sich formschlüssig an das obere Ende des ersten Abschnitts anschließt.

Der konkave zweite Abschnitt des Umlenkelements bewirkt dann die eigentliche Umlenkung der Bewegungsrichtung des partikelförmigen Guts in Richtung zum Boden des Behälters hin, während der formstetige Anschluss des zweiten Abschnitts an den ersten Abschnitt wieder vorteilhafterweise eine abrupte Bewegungsänderung der Partikel beim Übergang vom ersten Abschnitt auf den zweiten Abschnitt und damit eine erhöhte Abrasion vermeidet.

In einer weiteren bevorzugten Ausgestaltung dreht sich der zweite Abschnitt nicht mit der Wand mit.

Auch hier treten die Vorteile ein, die bereits im Zusammenhang mit der Ausgestaltung, wonach auch der erste Abschnitt des Umlenkelements nicht mit der Wand mitdreht, erzielt werden. Insgesamt ist das Umlenkelement vorzugsweise so ausgebildet, dass es mit der rotierenden Wand des Behälters nicht mitdreht, sondern statisch ist.

In einer weiteren bevorzugten Ausgestaltung der Vorrichtung ist das Umlenkelement über einen Teilbereich, der dem zumindest einem ersten oder gegebenenfalls zumindest einem zweiten Luftspalt folgt, luftdurchlässig.

Durch den luftdurchlässigen Teilbereich des Umlenkelements kann die durch den zumindest einen Luftspalt eingeleitete Luft zumindest teilweise nach oben aus dem Behälter abgeführt werden, wodurch vorteilhafterweise vermieden wird, dass der durch den zumindest einen Luftspalt eingeleitete Luftstrom Behandlungsprozesse, die im Inneren des Behälters ablaufen, beeinträchtigt, wie oben bereits beschrieben. Die Luftdurchlässigkeit des genannten Teilbereichs des Umlenkelements kann beispielsweise durch eine Perforation des Umlenkelements realisiert sein, wobei diese Perforationen im Sinne einer zu ermöglichenden Behandlung von kleinpartikeligem Gut sehr klein ausgebildet sein kann, so dass das Entweichen von Partikeln durch die Perforationen vermieden wird. Da hier nur Luft abgeführt wird, können solche Perforationen auch miniaturisiert ausgebildet sein, im Unterschied zum Einblasen von Luft durch eine Perforation zum Zwecke der Trocknung der Partikel, weil bei der Zuführung von Trocknungsluft ein entsprechend hoher Durchsatz erforderlich ist.

In einer weiteren bevorzugten Ausgestaltung der Vorrichtung ist die Breite des ersten und/oder gegebenenfalls zweiten Luftspalts und/oder der Luftstrom hinsichtlich Druck und Durchsatz einstellbar.

Durch die Einstellbarkeit des zumindest einen Luftspalts kann die Menge an Luftströmung auf das jeweilige Gut, insbesondere die Partikelgröße angepasst werden. Vorzugsweise kann der zumindest eine Luftspalt auch ganz geschlossen oder so weit geöffnet werden, dass das Gut aus der Bewegung heraus durch den Luftspalt, bei abgeschaltetem Luftstrom, aus dem Behälter entleert werden kann.

In einer weiteren bevorzugten Ausgestaltung der Vorrichtung sind an dem zumindest einen Luftspalt einstellbare Leitelemente angeordnet.

Hierbei ist von Vorteil, dass mittels der einstellbaren Leitelemente den Partikeln durch eine Beeinflussung der Strömungsrichtung des durch den zumindest einen Luftspalt eingeleiteten Luftstroms eine stabile Richtung gegeben werden kann, beispielsweise kann den Partikeln eine gemäß den oben beschriebenen Ausgestaltungen ausschließlich in Richtung einer Mantellinie der Wand bzw. des Umlenkelements gerichtete Bewegungsrichtung oder zusätzlich eine Bewegungsrichtung in Umfangsrichtung bzw. Drehrichtung der Wand gerichtete Bewegungskomponente aufgeprägt werden.

In einer weiteren bevorzugten Ausgestaltung der Vorrichtung weist der Boden zumindest einen Luftspalt auf, wobei für den Boden eine Luftzuführeinrichtung vorgesehen ist, wobei der zumindest eine Luftspalt des Bodens und/oder die Luftzuführeinrichtung für den Boden so ausgebildet ist, dass durch den Luftspalt des Bodens eingeleitete Luftströmung eine im Wesentlichen tangential zu dem Boden und zur Wand hin gerichtete Strömungskomponente aufweist.

Mit dieser Maßnahme wird der bereits oben beschriebene Vorteil erreicht, dass das Gut mittels des durch den zumindest einen Luftspalt eingeleiteten Luftstroms entlang dem Boden zur Wand hin bewegt werden kann, ohne dass der Boden dazu wie die Wand in Rotation versetzt werden muss. Außerdem kann die durch den Luftspalt eingeleitete Luftströmung zur Trocknung der Partikel, falls diese mit einem feuchten Überzugsmedium besprüht wurden, genutzt werden, ohne dass diese Luftströmung beispielsweise den über dem Boden befindlichen Sprühnebel, mit dem das Überzugsmedium aufgesprüht wird, beeinträchtigt.

Dabei ist es weiterhin bevorzugt, wenn der Boden aus einer Mehrzahl von konzentrischen Ringelementen mit unterschiedlichen Durchmessern aufgebaut ist, die einander radial teilweise überlappend geschichtet angeordnet sind und zwischen sich eine Mehrzahl von Luftspalten bilden.

Diese Ausgestaltung hat den Vorteil, dass durch die Mehrzahl von Luftspalten in gezielter und gerichteter Weise eine große Luftmenge in den Behälter eingeleitet werden kann, die somit aufgrund ihrer erhöhten Aufnahmefähigkeit für Feuchtigkeit besonders gut zum Trocknen genutzt werden kann.

In einer weiteren bevorzugten Ausgestaltung der Vorrichtung ist die Breite des zumindest einen Luftspalts des Bodens einstellbar.

Auch diese Maßnahme trägt wiederum vorteilhafterweise zur Flexibilität der erfindungsgemäßen Vorrichtung und des erfindungsgemäßen Verfahrens bei, weil über die Einstellbarkeit der Breite des zumindest einen Luftspalts des Bodens die durch diesen Luftspalt eingeführte Luftmenge variiert und kontrolliert werden kann. Außerdem kann der zumindest eine Luftspalt des Bodens aufgrund der Einstellbarkeit der Breite auch ganz geschlossen werden, wodurch ein Herausfallen des partikelförmigen Guts durch den zumindest einen Luftspalt vermieden werden kann, beispielsweise beim Einfüllen des Guts vor dem Beginn des Verfahrens in den Behälter oder nach Beendigung des Behandlungsvorgangs.

In einer weiteren bevorzugten Ausgestaltung der Vorrichtung öffnet der zumindest eine Luftspalt des Bodens selbsttätig durch Beaufschlagen mit dem Luftstrom und verkleinert sich oder schließt selbsttätig bei nachlassendem oder abgeschaltetem Luftstrom.

Hierbei ist von Vorteil, dass das Schließen und Öffnen des zumindest einen Luftspalts des Bodens durch die Inbetriebnahme, d.h. durch Einschalten der Vorrichtung zum Ausführen eines Behandlungsvorgangs, bzw. durch die Außerbetriebnahme, d.h. durch Abschalten der Vorrichtung nach beendigtem Behandlungsvorgang, automatisch erfolgt, ohne dass das Bedienungspersonal den zumindest einen Luftspalt entsprechend dem jeweiligen Betriebszustand einstellen und kontrollieren muss.

In einer weiteren bevorzugten Ausgestaltung der Vorrichtung weist der Boden Luftleitelemente auf, die der durch den zumindest einen Luftspalt des Bodens eingeleiteten Luftströmung zusätzlich eine in Drehrichtung der Wand gerichtete Strömungskomponente verleihen.

Hierbei ist von Vorteil, dass die Partikel bei ihrer Bewegung entlang des Bodens bereits eine zusätzliche in Umfangsrichtung gerichtete Bewegungskomponente aufnehmen, wodurch ein sanfterer Übergang der Partikel vom Boden auf die rotierende Wand erreicht wird, wodurch beim Übergang auf die Wand Abrasionseffekte verringert oder sogar ausgeschaltet werden.

In einer weiteren bevorzugten Ausgestaltung der Vorrichtung dreht der Boden nicht mit der Wand mit.

Ein Mitdrehen des Bodens ist im Unterschied zu den bekannten Vorrichtungen des Standes der Technik nicht erforderlich, wenn die Bewegungsenergie über die Luftströmung den Partikeln des Guts zugeführt wird, die durch den zumindest einen Luftspalt des Bodens eingeleitet wird. Allerdings kann der Boden auch um die vertikale Drehachse rotierend ausgebildet sein, wobei zusätzlich vorgesehen sein kann, dass der Boden mit einer anderen Drehgeschwindigkeit rotiert als die Wand. Ein nicht mitdrehender Boden hat jedoch den Vorteil, dass für den Boden kein separater Antrieb vorgesehen sein muss, wenn dieser nicht einstückig mit der Wand des Behälters verbunden ist.

In einer weiteren bevorzugten Ausgestaltung der Vorrichtung weist der Behälter eine sich von oben nach unten verjüngende Rückführfläche auf, auf der das von dem Umlenkelement umgelenkte Gut nach unten in Richtung zum Boden zurückbewegt wird.

Die Rückführfläche hat den Vorteil, dass das partikelförmige Gut nicht vom Umlenkelement über die Höhe des Behälters auf den Boden zurückfällt, wo es aufgrund der Aufprallgeschwindigkeit beschädigt werden könnte bzw. vom Boden wieder wegspringt. Die Rückführfläche trägt somit in vorteilhafter Weise zu einer schonenden und homogenen Umwälzung des partikelförmigen Guts bei.

Dabei ist es weiterhin bevorzugt, wenn die Rückführfläche über ein Gleitringlager an der Wand abgestützt ist, derart, dass sie sich nicht oder nur geringfügig mit der Wand mitdreht.

Diese Ausgestaltung ist insbesondere dann von Vorteil, wenn die Partikel bei ihrer Umlenkung am Umlenkelement keine Bewegungskomponente in Umfangsrichtung des Behälters besitzen und somit in Form eines ringartigen vertikalen Vorhangs von dem Umlenkelement abfallen. In diesem Fall kann nämlich die Rückführfläche nicht mit Traversen, die nach oben aus dem Behälter herausragen, aufgehängt werden, da diese Traversen das Gut beim Abfallen auf die Rückführfläche stören würden. Das Vorsehen eines Gleitringlagers, über die die Rückführfläche an der Wand abgestützt ist, hat dabei den Vorteil, dass die Rückführfläche zumindest nicht mit der Drehgeschwindigkeit der Wand mit dieser mitdreht, sondern allenfalls mit sehr geringer Drehgeschwindigkeit, die sich aufgrund der Reibung des Gleitringlagers ergibt.

In einer weiteren bevorzugten Ausgestaltung der Vorrichtung ist die Rückführfläche aus einer Mehrzahl von konzentrischen Ringelementen aufgebaut, die einander teilweise überlappen und zwischen sich eine Mehrzahl von Luftspalten bilden.

Hierbei ist von Vorteil, dass auch die Rückführfläche in gerichteter und gezielter Weise mit einer oder mehreren Luftströmen beflutet werden kann, was die nach unten gerichtete Bewegung der Partikel des Guts in Richtung zum Boden hin unterstützen kann.

Entsprechend ist es in einer bevorzugten Ausgestaltung vorgesehen, dass die Luftspalte der Rückführfläche so ausgebildet sind, dass eine durch sie eingeleitete Luftströmung eine von oben nach unten und im Wesentlichen parallel zum Verlauf der Rückführfläche gerichtete Strömungskomponente aufweist.

Der weitere Vorteil einer Beflutung der Rückführfläche mit einer Luftströmung geschieht nicht nur in einer verbesserten Kinematik der Bewegung der Partikel auf der Rückführfläche, sondern kann zusätzlich auch zum Trocknen der Partikel genutzt werden, wenn diese mit einem feuchten Überzugsmedium behandelt werden.

In einer weiteren bevorzugten Ausgestaltung der Vorrichtung ist eine Sprüheinrichtung zum Besprühen des Guts mit einem feuchten Überzugsmedium in dem Behälter angeordnet, die eine Ringspaltdüse aufweist, wobei die Düse in dem Behälter stehend angeordnet ist und die Zuführung des Überzugsmediums und von Sprühluft in die Düse von unten nach oben erfolgt, wobei die Düse von oben mit einem zusätzlichen Luftstrom beaufschlagbar ist.

Es hat sich herausgestellt, dass eine stehende Anordnung einer Ringspaltdüse gegenüber einer hängenden Anordnung den Vorteil hat, dass die Sprühfunktion bei einer stehenden Anordnung verbessert ist. Der zusätzlich von oben zugeführte Luftstrom stellt sicher, dass sich der Sprühnebel in einem Umfangswinkel von 360° gleichmäßig ausbildet und ein im Wesentlichen horizontaler Sprühnebel erzeugt wird, der die Partikel des Guts vorzugsweise beim Abfließen von der Rückführfläche zum Boden hin an einer wohl definierten Position gleichmäßig benetzt.

Weitere Vorteile ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: eine Vorrichtung zum Behandeln eines partikelförmigen Guts in einem Schnitt durch eine vertikale Längsmittelebene der Vorrichtung;
- Fig. 2: einen vergrößerten Ausschnitt der Vorrichtung in Fig. 1; und
- Fig. 3: eine Draufsicht auf den Rahmen der Vorrichtung in Fig. 1.

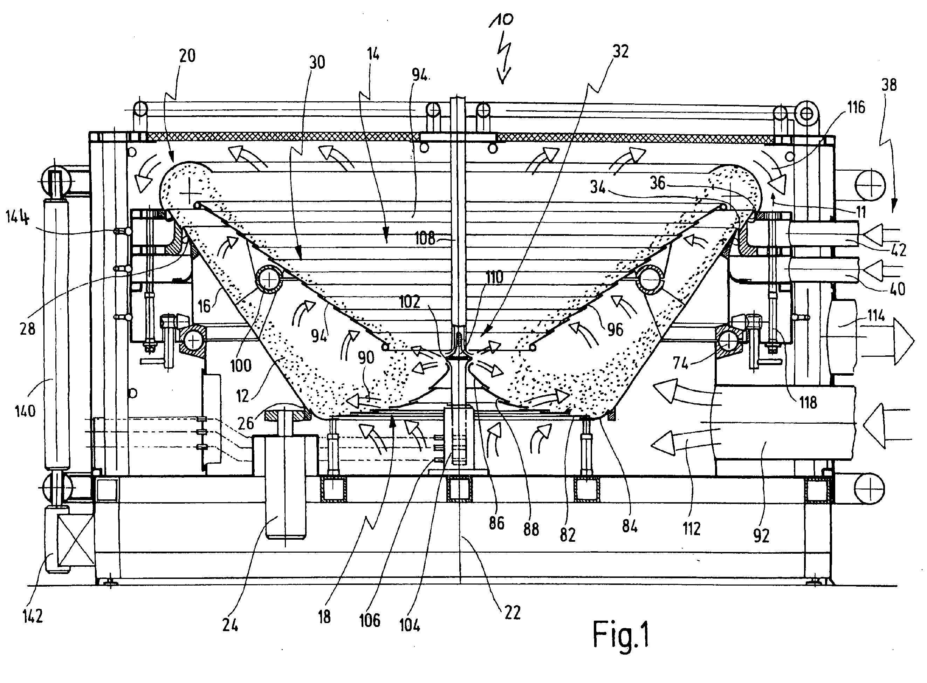

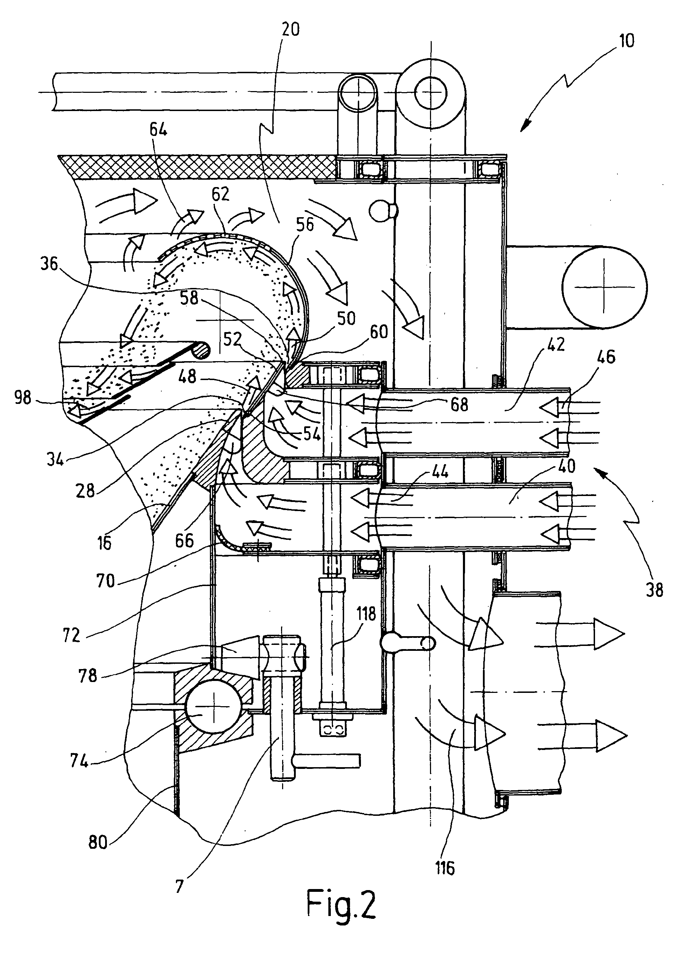

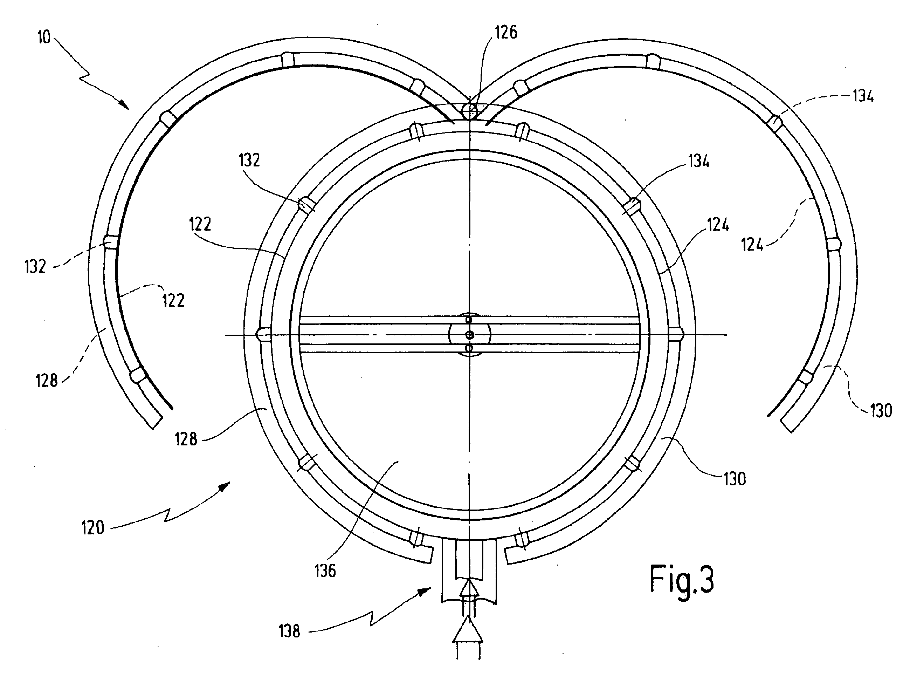

In Fig. 1 ist eine mit dem allgemeinen Bezugszeichen 10 versehene Vorrichtung zum Behandeln eines partikelförmigen Guts 12, das durch eine Vielzahl von Punkten angedeutet ist, dargestellt. In Fig. 2 ist ein vergrößerter Ausschnitt der Vorrichtung 10 dargestellt. Fig. 3 zeigt weitere Merkmale der Vorrichtung 10.

Die Vorrichtung 10 dient insbesondere zum Behandeln eines partikelförmigen Guts mit einem Überzugsmedium, insbesondere zum Beschichten von Arzei-, Lebensmittel-, technischen oder chemischen Formlingen oder zum Herstellen bzw. Behandeln von Pellets. Die Vorrichtung 10 weist einen Behälter 14 auf, in dem das Gut 12 in einer fortlaufenden Bewegung umgewälzt wird.

Der Behälter 14 weist eine hochstehende, sich von unten nach oben erweiternde Wand 16, einen sich unten an die Wand 16 anschließenden Boden 18 und ein sich oben an die Wand 16 anschließendes Umlenkelement 20 auf.

Die Wand 16 ist um eine vertikale Drehachse 22 in Rotation antreibbar. Ein Drehantrieb 24 ist für die Wand 16 vorgesehen, der mit einem unteren Ende 26 der Wand 16 in Eingriff steht. Ein oberes Ende der Wand 16 ist mit dem Bezugszeichen 28 versehen.

Die Wand 16 ist zwischen ihrem unteren Ende 26 und ihrem oberen Ende 28 luftundurchlässig ausgebildet.

Innerhalb des Behälters 14 ist weiterhin eine Rückführfläche 30 als Rückführungsfläche für das Gut 12 angeordnet. Die Rückführfläche 30 verjüngt sich von oben nach unten und ist im gezeigten Ausführungsbeispiel konisch ausgebildet. Ebenso ist die Wand 16 konisch ausgebildet, weist jedoch einen kleineren Öffnungswinkel als die Rückführfläche 30 auf.

Schließlich weist die Vorrichtung 10 als weitere Baugruppe eine Sprüheinrichtung 32 auf, mit der ein feuchtes Überzugsmedium auf das partikelförmige Gut 12 bei seiner Umwälzbewegung aufgesprüht wird.

Nachfolgend wird zunächst die Vorrichtung 10 mit Bezug auf Fig. 2 im Bereich der Wand 16 und des Umlenkelements 20 näher beschrieben.

Im Übergangsbereich von der Wand 16 zum Umlenkelement 20 sind ein erster Luftspalt 34 und ein zweiter Luftspalt 36 vorhanden.

Eine Luftzuführeinrichtung 38 weist einen ersten Zufuhrkanal 40 und einen zweiten Zufuhrkanal 42 auf. Über den ersten Zufuhrkanal 40 wird eine mit Pfeilen 44 angedeutete Luftströmung dem ersten Luftspalt 34 zugeführt, während über den zweiten Zufuhrkanal 42 dem zweiten Luftspalt 36 eine mit Pfeilen 46 angedeutete Luftströmung zugeführt wird. Der erste Zufuhrkanal 40 und der zweite Zufuhrkanal 42 sind luftdicht voneinander getrennt, so dass die durch den Zufuhrkanal 40 zugeführte Luftströmung von der durch den Zufuhrkanal 42 zugeführten Luftströmung unabhängig ist. Diese beiden Luftströmungen können zwar von der gleichen Quelle, beispielsweise einem Hochdruckgebläse (nicht dargestellt) erzeugt werden, können jedoch auch von unterschiedlichen Quellen stammen und insbesondere hinsichtlich der zugeführten Luftmenge und des Druckes unabhängig voneinander insbesondere unterschiedlich eingestellt werden.

Der erste Luftspalt 34 und der zweite Luftspalt 36 und/oder die Luftzufuhreinrichtung 38 sind so ausgebildet, dass der durch den Luftspalt 34 bzw. 36 eingeleitete jeweilige Luftstrom eine im Wesentlichen von unten nach oben und im sich an den Luftspalt 34 bzw. 36 anschließenden Bereich im Wesentlichen tangential zum Verlauf des Umlenkelements 20 gerichtete Strömungskomponente aufweist, die mit Pfeilen 48 bzw. 50 angedeutet ist.

Das Umlenkelement 20 weist einen ersten Abschnitt 52 auf, der sich unmittelbar an die Wand 16 anschließt, wobei der erste Luftspalt 34 zwischen dem oberen Ende 28 der Wand 16 und einem unteren Ende 54 des ersten Abschnittes 52 ausgebildet ist. Das obere Ende 28 der Wand 16 überlappt dabei innenseitig geringfügig das untere Ende 54 des Abschnitts 52.

Der erste Luftspalt 34 erstreckt sich über einen Umfang von 360° um die Drehachse 22.

Der erste Abschnitt 52 erweitert sich, wie aus Fig. 2 hervorgeht, von unten nach oben mit einer die Form der Wand 16 im Bereich deren oberen Endes 28 aufnehmenden Form, d.h. ist wie die Wand 16 als Kegelmantelabschnitt ausgebildet.

Der erste Abschnitt 52 ist statisch, d.h. dreht nicht um die Drehachse 22 mit der Wand 16 mit.

Das Umlenkelement 20 weist weiterhin zumindest einen, im gezeigten Ausführungsbeispiel genau einen zweiten Abschnitt 56 auf, wobei der zweite Luftspalt 36 zwischen einem oberen Ende 58 des ersten Abschnitts 52 und einem unteren Ende 60 des zweiten Abschnitts 56 ausgebildet ist. Dabei überlappt das obere Ende 58 des ersten Abschnitts 52 das untere Ende 60 des zweiten Abschnitts innenseitig geringfügig.

Der zweite Abschnitt 56 ist von der Behältermitte aus gesehen konkav gewölbt, wobei sich das untere Ende 60 des zweiten Abschnitts 56 formstetig bzw. tangential an das obere Ende 58 des ersten Abschnitts 52 anschließt. Der zweite Abschnitt 56 ist im Querschnitt vorzugsweise wie dargestellt halbkreisförmig ausgebildet.

Wie der erste Abschnitt 52 ist auch der zweite Abschnitt 56 des Umlenkelements 20 statisch angeordnet, d.h. dreht nicht mit der Wand 16 um die Drehachse 22 mit, sondern ist feststehend.

Das Umlenkelement 20, hier der zweite Abschnitt 56 ist über einen Teilbereich, der den Luftspalten 34 und 36 folgt, vorzugsweise wie dargestellt über etwa die zweite Hälfte des zweiten Abschnitts 56 luftdurchlässig ausgebildet, weist in diesem Teilbereich beispielsweise eine Perforation 62 auf. Die Perforation 62 besteht aus einer Vielzahl von sehr kleinen Löchern, die ein Hindurchtreten des partikelförmigen Guts 12 vermeidet, während zumindest ein Teil der durch die Luftspalte 34 und 36 eingeleiteten Luftströmungen durch die Perforation 62 entweichen kann, wie mit Pfeilen 64 angedeutet ist.

Die Breite der Luftspalte 34 bzw. 36 ist einstellbar, und vorzugsweise unabhängig voneinander einstellbar.

An dem ersten Luftspalt 34 und dem zweiten Luftspalt 36 sind umfänglich verteilt und voneinander beabstandet eine Vielzahl von Leitelementen 66 und 68 angeordnet, die einstellbar sind, um die Strömungsrichtung der durch die Luftspalte 34 und 36 eingeleiteten Luftströmungen zu beeinflussen und damit dem partikelförmigen Gut 12 eine stabile Bewegungsrichtung zu verleihen.

Die durch die Luftspalte 34 oder 36 eingeleiteten Luftströmungen können dabei so orientiert sein, dass sie ausschließlich eine Strömungskomponente parallel zu einer Mantellinie der Wand 16 bzw. des Umlenkelements 20 besitzen, wobei eine solche Mantellinie beispielsweise in der Zeichenebene der Fig. 3 liegt und in dieser entlang dem Umlenkelement 20 verläuft.

Der erste Luftzufuhrkanal 40 ist wie der zweite Zufuhrkanal 42 statisch angeordnet. Um den ersten Zufuhrkanal 40 gegenüber dem rotierenden Teil des Behälters 14 abzudichten, ist eine Dichtlippe 70 vorgesehen, die gleitend an einer mit der Wand 16 fest verbundenen rotierenden senkrechten Wand 42 anliegt.

Der erste Zufuhrkanal 40 und der zweite Zufuhrkanal 42 erstrecken sich im Bereich der Luftspalte 34 und 36 wie die Luftspalte 34 und 36 über 360°, d.h. über einen vollen Umfang des Behälters 14 und sind in unmittelbarer Nähe der Luftspalte 34, 36 nach oben gerichtet, wodurch den den Luftspalten 34, 36 zugeführten Luftströmungen bereits eine nach oben gerichtete Strömungskomponente verliehen wird.

Die drehbare Wand 16 des Behälters 14 ist über eine vertikale Wand 72 drehbar auf einer Lagerstelle 74 gelagert, die vorzugsweise als Kugel-Ringlager ausgebildet ist.

Ein ausschwenkbarer Niederhalter 76 hält mit einer Rolle 78 die Wand 16 über die vertikale Wand 72 an der Lagerstelle 74 gegen ein unteres Rahmenteil 80 der Vorrichtung 10.

Wieder mit Bezug auf Fig. 1 wird nachfolgend die Ausgestaltung des Bodens 18 und der Rückführfläche 30 näher beschrieben.

Der Boden 18 ist aus einer Mehrzahl von bezüglich der Drehachse 22 konzentrischen Ringelementen 82 aufgebaut, die jeweils einen unterschiedlichen Durchmesser aufweisen und einander radial teilweise überlappend geschichtet angeordnet sind, wie aus Fig. 1 hervorgeht. Ein Ringelement 84 mit dem größten Durchmesser bildet dabei das unterste Ringelement der Schichtanordnung, während ein inneres Ringelement 86 mit dem kleinsten Durchmesser das oberste Ringelement der Anordnung bildet.

Zwischen jeweils benachbarten Ringelementen 82 ist jeweils ein Luftspalt 88 ausgebildet, durch die eine Luftströmung mit im Wesentlichen tangential zum Boden 18 und zur Wand 16 hin gerichteter Strömungskomponente eingeleitet werden kann, wie mit Pfeilen 90 angedeutet ist.

Die durch die Luftspalte 88 zwischen den Ringelementen 82 des Bodens 18 eingeleitete Luft wird über einen weiteren Zufuhrkanal 92 der Luftzuführeinrichtung 38 zugeführt, wobei eine durch den Zufuhrkanal 92 zugeführte Luftströmung von derselben Quelle stammen kann wie die durch die Zufuhrkanäle 40 oder 42 zugeführte Luft zu den Luftspalten 34, 36 oder von einer separaten Quelle, jedoch ist die durch den Zufuhrkanal 92 zugeführte Luft auf jeden Fall von der durch den Zufuhrkanal 40 oder den Zufuhrkanal 42 zugeführten Luft getrennt und wird unabhängig davon zugeführt. Beispielsweise kann die durch den Zufuhrkanal 92 zugeführte Luft auch hinsichtlich Temperatur und Trockengrad anders konditioniert sein als die durch die Zufuhrkanäle 40 und 42 zugeführte Luft.

Die Breite der Luftspalte 88 des Bodens 18 ist jeweils einstellbar, wobei die Einstellbarkeit unter den Luftspalten 88 auch unabhängig voneinander erfolgen kann. Dabei ist es vorgesehen, dass die Luftspalte 88 des Bodens 18 selbsttätig öffnen, wenn durch den Zufuhrkanal 92 eine Luftströmung mit einem entsprechenden Druck auf die Unterseite des Bodens 18 geleitet wird, und bei nachlassendem oder abgeschaltetem Luftstrom durch den Zufuhrkanal 92 verkleinern sich die Luftspalte 88 selbsttätig oder schließen sich vollständig bei vollständig abgeschaltetem Luftstrom.

Der Boden 18 kann in nicht dargestellter Weise an den Luftspalten 88 Luftleitelemente aufweisen, die der durch die Luftspalte 88 eingeleiteten Luftströmung zusätzlich eine in Drehrichtung der Wand 16 um die Drehachse 22 gerichtete Strömungskomponente verleihen.

Dies ist insbesondere dann von Vorteil, wenn der Boden 18 wie im gezeigten Ausführungsbeispiel statisch ist, d.h. fest steht und nicht mit der Wand 16 um die Drehachse 22 mit dreht.

Die Rückführfläche 30 ist ebenfalls aus einer Mehrzahl von konzentrisch bezüglich der Drehachse 22 angeordneten Ringelementen 94 aufgebaut, die von oben nach unten im Durchmesser abnehmen und einander teilweise überlappend angeordnet sind. Jeweils benachbarte Ringelemente 94 bilden zwischen sich jeweils einen vollumfänglichen Luftspalt 96 auf, so dass die Rückführfläche 30 eine Mehrzahl solcher Luftspalte 96 aufweist. Die Luftspalte 96 sind so ausgebildet, dass eine durch sie eingeleitete Luftströmung eine von oben nach unten und im Wesentlichen parallel zum Verlauf der Rückführfläche 30 gerichtete Strömungskomponente aufweist, wie mit Pfeilen 98 in Fig. 2 angedeutet ist. Auch hier können wieder einstellbare Luftleitelemente vorgesehen sein, um die Strömungsrichtung der Luft durch die Luftspalte 96 gezielt zu beeinflussen.

Die Rückführfläche 30 ist über ein Gleitringlager 100 an der drehbaren Wand 16 des Behälters 14 abgestützt. Das Gleitringlager 100 ist so ausgebildet, dass sich die Rückführfläche 30 bei der Rotation der Wand 16 aufgrund der unvermeidlichen Reibung des Gleitringlagers 100 allenfalls geringfügig mitdreht. Das Gleitringlager 100 ist beispielsweise ähnlich wie das Kugel-Ringlager 74 aufgebaut.

Die Sprüheinrichtung 32 zum Besprühen des Guts 12 mit einem feuchten Überzugsmedium weist eine Ringspaltdüse 102 auf, wobei die Düse 102 in dem Behälter 14 stehend angeordnet ist. Dazu weist die Sprüheinrichtung 32 einen Düsenbasiskörper 104 auf, der insgesamt drei Anschlüsse 106 zum Zuführen des Überzugsmediums und von Sprühluft bzw. Stützluft aufweist. Die Ringspaltdüse 102 ist in den Basiskörper 104 eingesteckt und kann von diesem abgezogen werden.

Die Zuführung des Überzugsmediums und von Sprühluft in die Ringspaltdüse 102 erfolgt bei dieser Anordnung demnach von unten nach oben. Die Ringspaltdüse 102 ist von oben mit einem zusätzlichen Luftstrom, der über eine Zuführung 108 zugeführt wird, beaufschlagbar. Die so über die Zuführung 108 zugeführte zusätzliche Luft wird auf einen konischen oder trompetenartigen Reflektorschirm 110 der Ringspaltdüse 102 geleitet, wodurch die so zugeführte Luft fladenartig über einen Umfangswinkel von 360° im Bereich der Ringspaltdüse 102 austritt und den von der Ringspaltdüse 102 abgegebenen Sprühnebel über einen vollen Umfangswinkel von 360° homogen ringförmig und horizontal formt.

Nachfolgend wird ein Verfahren zum Behandeln des partikelförmigen Guts 12 mittels der Vorrichtung 10 beschrieben.

Das partikelförmige Gut 12 wird vorzugsweise bei noch nicht rotierender Wand 16 in den Behälter 14 eingefüllt und sammelt sich auf dem Boden 18. Die Luftspalte 88 zwischen den Ringelementen 82 des Bodens 18 sind dabei geschlossen, so dass die Partikel nicht durch den Boden 18 hindurchfallen können.

Anschließend wird die Wand 16 in Rotation versetzt, und über den Zuführkanal 92 wird Luft unter den Boden 18 gemäß Pfeilen 112 zugeführt, die durch die Luftspalte 88 zwischen den Ringelementen 82 in den Behälter 14 eingeleitet wird. Die so eingeleitete Luftströmung gemäß den Pfeilen 90 bewirkt, dass das Gut 12 zunächst entlang dem Boden zur Wand 16 hin bewegt wird. Aufgrund der Rotation der schrägen Wand 16 wird nun das Gut 12 aufgrund von Zentrifugalkräften entlang der Wand 16 nach oben bewegt und gelangt zu dem feststehenden Umlenkelement 20. Durch die Luftspalte 34 und 36 zugeführte Luft bildet nun auf dem Umlenkelement 20, genauer gesagt auf dessen Gleitfläche, auf dem sich das Gut 12 bewegt, einen Luftfilm bzw. ein Luftkissen aus, das das partikelförmige Gut 12 entlang dem Umlenkelement 20 mitnimmt, ohne dass das Gut 12 abrasiv mit der Gleitfläche des Umlenkelements 20 in Berührung tritt. Von dem der Behältermitte zugewandten ringförmigen Ende des Umlenkelements 20 fällt dann das partikelförmige Gut 12 auf die Rückführfläche 30 und rutscht auf dieser unter der Wirkung der Schwerkraft, unterstützt durch eine durch die Spalte 96 zwischen den Ringelementen 94 der Rückführfläche 30 eingeleitete Luftströmung nach unten in einen durchmesserinneren Bereich des Behälters 14. Vom unteren Ende der Rückführfläche 30 fällt das partikelförmige Gut 12 auf den Boden 18 zurück. Beim freien Zurückfallen auf den Boden wird es von der Ringspaltdüse 102 mit einem feuchten Überzugsmedium besprüht.

Sowohl die durch den Boden 18 eingeleitete Luft als auch durch die Luftspalte 34 und 36 eingeleitete Luft dienen dabei zusätzlich der Trocknung des feuchten Überzugsmediums auf den Partikeln des Guts 12, ebenso hat auch die durch die Rückführfläche 30 hindurchtretende Luftströmung eine Trocknungswirkung auf das darauf abgleitende partikelförmige Gut. Die insgesamt in den Behälter 14 eingeleitete Luftströmung wird als Abluft über einen Abfuhrkanal 114, an den ein nicht dargestelltes Absauggebläse angeschlossen ist, gemäß Pfeilen 116 (vgl. auch Fig. 2) abgeführt.

Die durch die Luftspalte 34 und 36 eingeleitete Luftströmung wird vorzugsweise mit einer Strömungskomponente durch die Luftspalte 34 und 36 eingeleitet, die sich entlang einer Mantellinie der Wand 16 bzw. des sich anschließenden Umlenkelements 20 erstreckt, d.h. entlang des Umlenkelements 20 bewegt sich das Gut im Wesentlichen ohne eine Bewegungskomponente in Umfangsrichtung, sondern lediglich mit einer Bewegungskomponente, die keine senkrecht zur Zeichenebene in Figuren 1 und 2 gerichtete Bewegungskomponente aufweist.

Die durch die Luftspalte 34 und 36 eingeleitete Luft wird gemäß den Pfeilen 64 in Fig. 2 teilweise durch die Perforation 62 des Umlenkelements 20 hindurch aus dem Behälter 14 abgeleitet, bevor das partikelförmige Gut das Ende des Umlenkelements 20 erreicht hat, und teilweise auf die Rückführfläche 30 umgelenkt, wo sie wie zuvor beschrieben durch deren Luftspalte 96 tritt.

Nachfolgend werden weitere Aspekte der Vorrichtung 10 beschrieben.

Der zweite Abschnitt 56 des Umlenkelements ist aus der in Fig. 2 dargestellten Stellung nach oben gemäß einem Pfeil 116 in Fig. 1 ausfahrbar, um das Gut 12 nach Beendigung eines Behandlungsvorganges aus der Bewegung heraus aus dem Behälter 14 zu entleeren. Ebenso kann der erste Abschnitt 52 des Umlenkelements 20 nach oben ausfahrbar sein. Zum Ausführen des zweiten Abschnitts 56 und/oder des ersten Abschnitts 52 des Umlenkelements 20 ist ein Linearantrieb 118, beispielsweise ein pneumatischer Antrieb, vorgesehen.

Ein weiterer Aspekt der Vorrichtung 10 wird nachfolgend mit Bezug unter anderem auf Fig. 3 beschrieben.

Die Vorrichtung 10 weist einen Rahmen 120 auf, der zwei halbzylindrisch geformte Türen 122 und 124 aufweist, die um eine vertikale Schwenkachse 126 verschwenkbar sind. In Fig. 3 sind die Türen 122 und 124 sowohl in der geöffneten (mit gestrichelter Bezugszeichenlinie angedeutet) und in geschlossener Stellung dargestellt. Über die Türen 122 und 124 wird im geöffneten Zustand ein nahezu allseitiger Zugang zu dem Behälter 14 und den übrigen Baugruppen der Vorrichtung 10 geschaffen.

Die Türen 122 und 124 sind jeweils an einem Rahmenteil 128, 130 über eine Mehrzahl von Abstandshaltern 132, 134 befestigt. Die Tragrahmen 128, 130 sind rohrförmig ausgebildet.

Ein Deckel 136, der ebenfalls geöffnet werden kann, bildet den oberen Abschluss der Vorrichtung 10.

Auf der der Schwenkachse 126, die die Bedienerseite bildet, gegenüberliegenden Seite, die die Versorgungsseite der Vorrichtung 10 bildet, sind Anschlüsse 138 zur Versorgung der Sprüheinrichtung 32 und der Luftversorgung des Bodens 18 angeordnet.

Der Rahmen 120 der Vorrichtung 10 weist weiterhin eine Mehrzahl von vertikal angeordneten Rahmenteilen auf, die eine Mehrzahl von Rohren aufweisen, die umfänglich verteilt angeordnet sind, beispielsweise vier bis sechs Rohre, von denen in Fig. 1 eine mit dem Bezugszeichen 140 versehen ist. Der so gebildete Rohrrahmen stabilisiert dabei die Türen 122 und 124 der Vorrichtung 10.

In Fig. 1 ist ferner ein Support 142 für die Türen 122 und 124 dargestellt.

Die rohrförmigen Rahmenteile der Vorrichtung 10 dienen dabei gleichzeitig zum Zuführen von Waschflüssigkeit zu einer Mehrzahl von Düsen 142, über die Waschflüssigkeit zum Reinigen des Inneren der Vorrichtung nach einem Behandlungsgang oder vor einem Chargenwechsel abgegeben wird.

## Patentansprüche

1. Verfahren zum Behandeln eines partikelförmigen Guts (12), bei dem das Gut (12) in einem Behälter (14), der einen Boden (18), eine hochstehende, sich von unten nach oben erweiternde Wand (16) und im oberen Bereich ein sich an die Wand (16) anschließendes Umlenkelement (20) aufweist, in einer fortlaufenden Umwälzbewegung entlang des Bodens (18) zur Wand (16) und durch Rotation der Wand (16) um eine vertikale Drehachse (22) entlang der Wand (16) nach oben bewegt und am Umlenkelement (20) so umgelenkt wird, dass es zum Boden (18) zurückgelangen kann, **dadurch gekennzeichnet, dass** das Gut (12) entlang des Umlenkelements (20) mittels eines Luftstroms bewegt wird, der durch zumindest einen Luftspalt (34, 36) im Übergangsbereich von der Wand (16) zum Umlenkelement (20) im Wesentlichen von unten nach oben und im sich an den Luftspalt (34, 36) anschließenden Bereich im Wesentlichen tangential zum Verlauf der Wand (16) und/oder des Umlenkelements (20) eingeleitet wird.

2. Verfahren nach Anspruch 1, **dadurch gekennzeichnet, dass** der Luftstrom zumindest mit einer Strömungskomponente durch den zumindest einen Luftspalt (34, 36) eingeleitet wird, die sich entlang einer Mantellinie der Wand (16) bzw. des sich anschließenden Umlenkelements (20) erstreckt.

3. Verfahren nach Anspruch 1, **dadurch gekennzeichnet, dass** der Luftstrom ausschließlich mit einer Strömungskomponente durch den zumindest einen Luftspalt (34, 36) eingeleitet wird, die sich entlang einer Mantellinie der Wand (16) bzw. des sich anschließenden Umlenkelements (20) erstreckt.

4. verfahren nach einem der Ansprüche 1 bis 3, **dadurch gekennzeichnet, dass** der Luftstrom, bevor das Gut (12) das Ende des Umlenkelements (20) erreicht hat, zumindest teilweise nach oben aus dem Behälter (14) abgeführt wird.

5. Verfahren nach einem der Ansprüche 1 bis 4, **dadurch gekennzeichnet, dass** das Gut (12) entlang des Bodens (18) mittels eines weiteren Luftstroms bewegt wird, der durch zumindest einen Luftspalt (88) im Boden (18) von unten und mit im Wesentlichen tangential zum Boden (18) verlaufender und zur Wand (16) hin gerichteter Strömungskomponente in den Behälter (14) eingeleitet wird.

6. Verfahren nach einem der Ansprüche 1 bis 5, **dadurch gekennzeichnet, dass** das Gut (12) mit einem feuchten Überzugsmedium besprüht wird, das auf das Gut (12) in Form eines ringförmigen Sprühnebels aufgesprüht wird, bevor das Gut (12) auf den Boden (18) zurückgelangt, und dass der Sprühnebel mit einem von oben nach unten gerichteten Luftstrom so beaufschlagt wird, dass der Sprühnebel im Wesentlichen horizontal gerichtet ist.

7. Vorrichtung zum Behandeln eines partikelförmigen Guts (12), mit einem Behälter (14), der einen Boden (18), eine hochstehende, sich von unten nach oben erweiternde Wand (16) und in einem oberen Bereich ein Umlenkelement (20) aufweist, um das entlang der Wand (16) nach oben bewegte Gut (12) in seiner Bewegungsrichtung so umzulenken, dass es wieder zum Boden (18) zurückgelangen kann, wobei die Wand (16) um eine vertikale Drehachse (22) in Rotation antreibbar ist, **dadurch gekennzeichnet, dass** im Übergangsbereich von der Wand (16) zum Umlenkelement (20) zumindest ein erster Luftspalt (34, 36) vorhanden ist, und dass eine Luftzuführeinrichtung (38) zum Zuführen eines Luftstroms vorhanden ist, wobei der erste Luftspalt (34, 36) und/oder die Luftzuführeinrichtung (38) so ausgebildet ist, dass der durch den Luftspalt (34, 36) eingeleitete Luftstrom eine im Wesentlichen von unten nach oben und im sich an den Luftspalt (34, 36) anschließenden Bereich im Wesentlichen tangential zum Verlauf der Wand (16) und/oder des Umlenkelements (20) gerichtete Strömungskomponente aufweist.

8. Vorrichtung nach Anspruch 7, **dadurch gekennzeichnet, dass** im Übergangsbereich von der Wand (16) zum Umlenkelement (20) zumindest ein zweiter Luftspalt (34, 36) vorhanden ist, der von dem ersten Luftspalt (34, 36) vertikal beabstandet ist, wobei der zweite Luftspalt (34, 36) und/oder die Luftzuführeinrichtung (38) so ausgebildet ist, dass ein von der Luftzuführeinrichtung (38) zugeführter Luftstrom eine im Wesentlichen von unten nach oben und im sich an den Luftspalt (34, 36) anschließenden Bereich im Wesentlichen tangential zum Verlauf der Wand (16) und/oder des Umlenkelements (20) gerichtete Strömungskomponente aufweist.

9. Vorrichtung nach Anspruch 7 und 8, **dadurch gekennzeichnet, dass** die Luftzuführeinrichtung (38) einen ersten Zufuhrkanal (40) zum Zuführen eines ersten Luftstroms zu dem ersten Luftspalt (34) und zumindest einen von dem ersten Zufuhrkanal (40) getrennten zweiten Zufuhrkanal (42) zum Zuführen eines zweiten Luftstroms zu dem zumindest einen zweiten Luftspalt (36) aufweist.

10. Vorrichtung nach einem der Ansprüche 7 bis 9, **dadurch gekennzeichnet, dass** das Umlenkelement (20) einen ersten Abschnitt (52) aufweist, der sich unmittelbar an die Wand (16) anschließt, wobei der erste Luftspalt (34) zwischen einem oberen Ende (28) der Wand (16) und einem unteren Ende (54) des ersten Abschnitts (52) vorhanden ist.

11. Vorrichtung nach Anspruch 10, **dadurch gekennzeichnet, dass** sich der erste Abschnitt (52) von unten nach oben mit einer die Form der Wand (16) im Bereich deren oberen Endes (28) aufnehmenden Form erweitert.

12. Vorrichtung nach Anspruch 10 oder 11, **dadurch gekennzeichnet, dass** der erste Abschnitt (52) nicht mit der Wand (16) mitdreht.

13. Vorrichtung nach Anspruch 8 und einem der Ansprüche 10 bis 12, **dadurch gekennzeichnet, dass** das Umlenkelement (20) zumindest einen zweiten Abschnitt (56) aufweist, und dass der zweite Luftspalt (36) zwischen einem oberen Ende (58) des ersten Abschnitts (52) und einem unteren Ende (60) des zweiten Abschnitts (56) angeordnet ist.

14. Vorrichtung nach Anspruch 13, **dadurch gekennzeichnet, dass** der zweite Abschnitt (56) von der Behältermitte aus gesehen konkav gewölbt ist, und dass das untere Ende (60) des zweiten Abschnitts (56) sich formstetig an das obere Ende (58) des ersten Abschnitts (52) anschließt.

15. Vorrichtung nach Anspruch 13 oder 14, **dadurch gekennzeichnet, dass** sich der zweite Abschnitt (56) nicht mit der Wand (16) mitdreht.

16. Vorrichtung nach einem der Ansprüche 7 bis 15, **dadurch gekennzeichnet, dass** das Umlenkelement (20) über einen Teilbereich, der dem zumindest einen ersten oder gegebenenfalls zumindest einen zweiten Luftspalt (34, 36) folgt, luftdurchlässig ist.

17. Vorrichtung nach einem der Ansprüche 7 bis 16, **dadurch gekennzeichnet, dass** die Breite des ersten und/oder gegebenenfalls zweiten Luftspalts (34, 36) und/oder der Luftstrom hinsichtlich Druck und Durchsatz einstellbar ist.

18. Vorrichtung nach einem der Ansprüche 7 bis 17, **dadurch gekennzeichnet, dass** an dem zumindest einen Luftspalt (34, 36) einstellbare Leitelemente (66, 68) angeordnet sind.

19. Vorrichtung nach einem der Ansprüche 7 bis 18, **dadurch gekennzeichnet, dass** der Boden (18) zumindest einen Luft-, spalt (88) aufweist, und dass für den Boden (18) eine Luftzuführeinrichtung (38) vorgesehen ist, wobei der zumindest eine Luftspalt (88) des Bodens (18) und/oder die Luftzuführungseinrichtung (38) für den Boden (18) so ausgebildet ist, dass die durch den Luftspalt (88) des Bodens (18) eingeleitete Luftströmung eine im Wesentlichen tangential zum Boden (18) und zur Wand (16) hin gerichtete Strömungskomponente aufweist.

20. Vorrichtung nach Anspruch 19, **dadurch gekennzeichnet, dass** der Boden (18) aus einer Mehrzahl von konzentrischen Ringelementen (82) mit unterschiedlichen Durchmessern aufgebaut ist, die einander radial teilweise überlappend geschichtet angeordnet sind und zwischen sich eine Mehrzahl von Luftspalten (88) bilden.

21. Vorrichtung nach Anspruch 19 oder 20, **dadurch gekennzeichnet, dass** die Breite des zumindest einen Luftspalts (88) des Bodens (18) einstellbar ist.

22. Vorrichtung nach einem der Ansprüche 19 bis 21, **dadurch gekennzeichnet, dass** der zumindest eine Luftspalt (88) des Bodens (18) selbsttätig durch Beaufschlagen mit dem Luftstrom öffnet und bei nachlassendem oder abgeschaltetem Luftstrom sich selbsttätig verkleinert oder schließt.

23. Vorrichtung nach einem der Ansprüche 19 bis 22, **dadurch gekennzeichnet, dass** der Boden (18) Luftleitelemente aufweist, die der durch zumindest einen Luftspalt (88) des Bodens (18) eingeleiteten Luftströmung zusätzlich eine in Drehrichtung der Wand (16) gerichtete strömungskomponente verleihen.

24. Vorrichtung nach einem der Ansprüche 19 bis 23, **dadurch gekennzeichnet, dass** der Boden (18) nicht mit der Wand (16) mitdreht.

25. Vorrichtung nach einem der Ansprüche 7 bis 24, **dadurch gekennzeichnet, dass** der Behälter (14) eine sich von oben nach unten verjüngende Rückführfläche (30) aufweist, auf der das von dem Umlenkelement (20) umgelenkte Gut (12) nach unten in Richtung zum Boden (18) zurückbewegt wird.

26. Vorrichtung nach Anspruch 25, **dadurch gekennzeichnet, dass** die Rückführfläche (30) über ein Gleitringlager (100) an der Wand (16) abgestützt ist, derart, dass sie sich nicht oder nur geringfügig mit der Wand (16) mitdreht.

27. Vorrichtung nach Anspruch 25 oder 26, **dadurch gekennzeichnet, dass** die Rückführfläche (30) aus einer Mehrzahl von konzentrischen Ringelementen (94) aufgebaut ist, die einander teilweise überlappen und zwischen sich eine Mehrzahl von Luftspalten (96) bilden.

28. Vorrichtung nach Anspruch 27, **dadurch gekennzeichnet, dass** die Luftspalte (36) der Rückführfläche (30) so ausgebildet sind, dass eine durch sie eingeleitete Luftströmung eine von oben nach unten und im Wesentlichen parallel zum Verlauf der Rückführfläche (30) gerichtete Strömungskomponente aufweist.

29. Vorrichtung nach einem der Ansprüche 7 bis 28, **dadurch gekennzeichnet, dass** eine Sprüheinrichtung (32) zum Besprühen des Guts (12) mit einem feuchten Überzeugsmedium in dem Behälter (14) angeordnet ist, die eine Ringspaltdüse (102) aufweist, wobei die Düse (102) in dem Behälter (14) stehend angeordnet ist und die Zuführung des Überzugsmediums und von Sprühluft in die Düse (102) von unten nach oben erfolgt, und dass die Düse (102) von oben mit einem zusätzlichen Luftstrom beaufschlagt ist.

## Claims

1. A process for treating a particulate material (12), in which, in a container (14) which has a base (18), an upright wall (16) that widens from bottom to top, and in the upper region a deflection element (20) that adjoins the wall (16), the material (12) is moved in a continuous circulatory movement along the base (18) to the wall (16) and along the wall (16) upward as a result of rotation of the wall (16) about a vertical axis of rotation (22) and is deflected at the deflection element (20) in such a way that it can pass back to the base (18), **characterized in that** the material (12) is moved along the deflection element (20) by means of an air stream, which is introduced substantially from bottom to top through at least one air gap (34, 36) in the transition region from the wall (16) to the deflection element (20) and, in the region adjacent to the air gap (34, 36), substantially tangentially with respect to the course of the wall (16) and/or of the deflection element (20).

2. The process of claim 1, **characterized in that** the air stream is introduced through the at least one air gap (34, 36) at least with a flow component which extends along a surface line of the wall (16) or of the adjacent deflection element (20).

3. The process of claim 1, **characterized in that** the air stream is introduced through the at least one air gap (34, 36) exclusively with a flow component which extends along a surface line of the wall (16) or of the adjacent deflection element (20).

4. The process of anyone of claims 1 through 3, **characterized in that**, before the material (12) has reached the end of the deflection element (20), the air stream is at least partly led away upward out of the container (14).

5. The process of any one of claims 1 through 4, **characterized in that** the material (12) is moved along the base (18) by means of a further air stream, which is introduced into the container (14) from below through at least one air gap (88) in the base (18) and with a flow component running substantially tangentially with respect to the base (18) and oriented toward the wall (16).

6. The process of anyone of claims 1 through 5, **characterized in that** the material (12) is sprayed with a moist covering medium, which is sprayed onto the material (12) in the form of an annular spray mist before the material (12) passes back to the base (18), and wherein the spray mist is acted on with an air stream oriented from top to bottom in such a way that the spray mist is oriented substantially horizontally.

7. An apparatus for treating a particulate material (12), comprising a container (14) which has a base (18), an upright wall (16) that widens from bottom to top, and in an upper region a deflection element (20) in order to deflect the direction of movement of the material (12) moved upward along the wall (16) in such a way that it can pass back to the base (18) again, it being possible for the wall (16) to be driven in rotation about a vertical axis of rotation (22), **characterized in that**, in the transition region from the wall (16) to the deflection element (20), there is at least a first air gap (34, 36), and wherein there is an air feed device (38) for feeding an air stream, the first air gap (34, 36) and/or the air feed device (38) being configured such that the air stream introduced through the air gap (34, 36) has a flow component oriented substantially from bottom to top and, in the region adjoining the air gap (34, 36), oriented substantially tangentially with respect to the course of the wall (16) and/or of the deflection element (20).

8. The apparatus of claim 7, **characterized in that**, in the transition region from the wall (16) to the deflection element (20), there is at least a second air gap (34, 36) which is spaced apart vertically from the first air gap (34, 36), the second air gap (34, 36) and/or the air feed device (38) being configured such that an air stream fed in by the air feed device (38) has a flow component oriented substantially from bottom to top and, in the region adjoining the air gap (34, 36), oriented substantially tangentially with respect to the course of the wall (16) and/or of the deflection element (20).

9. The apparatus of claim 7 and 8, **characterized in that** the air feed device (38) has a first feed duct (40) for feeding a first air stream to the first air gap (34), and at least a second feed duct (42), separated from the first feed duct (40), for feeding a second air stream to the at least one second air gap (36).

10. The apparatus of anyone of claims 7 through 9, **characterized in that** the deflection element (20) has a first section (52) which directly adjoins the wall (16), the first air gap (34) being present between an upper end (28) of the wall (16) and a lower end (54) of the first section (52).

11. The apparatus of claim 10, **characterized in that** the first section (52) widens from bottom to top with a shape accommodating the shape of the wall (16) in the region of the upper end (28) of the latter.

12. The apparatus of claim 10 or 11, **characterized in that** the first section (52) does not corotate with the wall (16).

13. The apparatus of claim 8 and anyone of claims 10 through 12, **characterized in that** the deflection element (20) has at least a second section (56), and wherein the second air gap (36) is arranged between an upper end (58) of the first section (52) and a lower end (60) of the second section (56).

14. The apparatus of claim 13, **characterized in that** the second section (56), as viewed from the center of the container, is curved concavely, and wherein the lower end (60) of the second section (56) adjoins the upper end (58) of the first section (52) with a form fit.

15. The apparatus of claim 13 or 14, **characterized in that** the second section (56) does not corotate with the wall (16).

16. The apparatus of anyone of claims 7 through 15, **characterized in that** the deflection element (20) is air-permeable over a subregion which follows the at least one first or, if appropriate, at least one second air gap (34, 36).

17. The apparatus of anyone of claims 7 through 16, **characterized in that** the width of the first and/or, if appropriate, the second air gap (34, 36) and/or the pressure and throughput of the air stream are adjustable.

18. The apparatus of anyone of claims 7 through 17, **characterized in that** adjustable guide elements (66, 68) are arranged at the at least one air gap (34, 36).

19. The apparatus of anyone of claims 7 through 18, **characterized in that** the base (18) has at least one air gap (88), and wherein an air feed device (38) is provided for the base (18), the at least one air gap (88) in the base (18) and/or the air feed device (38) for the base (18) being configured in such a way that the air stream introduced through the air gap (88) in the base (18) has a flow component oriented substantially tangentially with respect to the base (18) and toward the wall (16).

20. The apparatus of claim 19, **characterized in that** the base (18) is constructed from a plurality of concentric ring elements (82) with different diameters, which are arranged in layers partly overlapping one another radially and between which a plurality of air gaps (88) form.

21. The apparatus of claim 19 or 20, **characterized in that** the width of the at least one air gap (88) in the base (18) can be adjusted.

22. The apparatus of anyone of claims 19 through 21, **characterized in that** the at least one air gap (88) in the base (18) opens automatically as a result of being acted on with the air stream and, when the air stream decreases or is switched off, automatically diminishes or closes.

23. The apparatus of anyone of claims 19 through 22, **characterized in that** the base (18) has air guide elements which additionally impart to the air stream introduced through at least one air gap (88) in the base (18) a flow component oriented in the direction of rotation of the wall (16).

24. The apparatus of anyone of claims 19 through 23, **characterized in that** the base (18) does not corotate with the wall (16).

25. The apparatus of anyone of claims 7 through 24, **characterized in that** the container (14) has a return surface (30) that tapers from top to bottom, on which the material (12) deflected by the deflection element (20) is moved back downward in the direction of the base (18).

26. The apparatus of claim 25, **characterized in that** the return surface (30) is supported on the wall (16) via a sliding ring bearing (100) in such a way that it does not corotate or corotates only slightly with the wall (16).

27. The apparatus of claim 25 or 26, **characterized in that** the return surface (30) is constructed from a plurality of concentric ring elements (94), which partly overlap one another and between which a plurality of air gaps (96) form.

28. The apparatus of claim 27, **characterized in that** the air gaps (36) in the return surface (30) are configured in such a way that an air stream introduced through them has a flow component oriented from top to bottom and substantially parallel to the course of the return surface (30).

29. The apparatus of anyone of claims 7 through 28, **characterized in that** a spraying device (32) for spraying the material (12) with a moist covering medium is arranged in the container (14) and has an annular gap nozzle (102), the nozzle (102) being arranged upright in the container (14) and the covering medium and spraying air being fed into the nozzle (102) from bottom to top, and wherein the nozzle (102) is acted on from above with an additional air stream.

## Revendications

1. Procédé pour traiter un produit (1 2) en forme de particules, dans lequel, dans un récipient (14) qui comporte un fond (18), une paroi (16) dressée s'élargissant de bas en haut et dans la partie supérieure un élément de renvoi (20) qui se raccorde à la paroi (16), le produit (12) se déplace dans un mouvement de brassage ininterrompu le long du fond (18) vers la paroi (16) et, par rotation de la paroi (16) autour d'un axe de rotation (22) vertical, le long de la paroi (16) vers le haut et est dévié sur l'élément de renvoi (20) de telle sorte qu'il peut retourner sur le fond (18), **caractérisé en ce que** le produit (12) est déplacé au moyen d'un courant d'air, qui est introduit à travers au moins une fente d'air (34, 36) dans la zone de transition de la paroi (16) à l'élément de renvoi (20), essentiellement de bas en haut et dans la zone se raccordant à la fente d'air (34, 36) essentiellement tangentiellement au tracé de la paroi (16) et/ou de l'élément de renvoi (20).

2. Procédé selon la revendication 1, **caractérisé en ce que** le courant d'air est introduit, à travers l'au moins une fente d'air (34, 36), au moins avec une composante de l'écoulement qui s'étend le long d'une génératrice de la paroi (16), respectivement de l'élément de renvoi (20) qui s'y raccorde.

3. Procédé selon la revendication 1, **caractérisé en ce que** le courant d'air est introduit, à travers l'au moins une fente d'air (34, 36), exclusivement avec une composante de l'écoulement qui s'étend le long d'une génératrice de la paroi (16), respectivement de l'élément de renvoi (20) qui s'y raccorde.

4. Procédé selon l'une des revendications 1 à 3, **caractérisé en ce que** le courant d'air est évacué au moins en partie vers le haut du récipient (14) avant que le produit (12) n'atteigne l'extrémité de l'élément de renvoi (20).

5. Procédé selon l'une des revendications 1 à 4, **caractérisé en ce que** le produit (12) est déplacé le long du fond (18) au moyen d'un autre courant d'air qui est introduit dans le récipient (14) à travers au moins une fente d'air (88) dans le fond (18) depuis le bas et avec une composante de l'écoulement s'étendant essentiellement tangentiellement par rapport au fond (18) et dirigée vers la paroi (16).

6. Procédé selon l'une des revendications 1 à 5, **caractérisé en ce que** le produit (12) est enduit par pulvérisation d'un milieu de revêtement humide qui est pulvérisé sur le produit (12) sous la forme d'un brouillard de pulvérisation annulaire avant que le produit (12) ne retourne sur le fond (18), et **en ce que** le brouillard de pulvérisation est soumis à un courant d'air orienté de haut en bas de telle façon que le brouillard de pulvérisation est orienté essentiellement horizontalement.

7. Dispositif pour traiter un produit (12) en forme de particules avec un récipient (14) qui comporte un fond (18), une paroi (16) dressée s'élargissant de bas en haut, et dans la partie supérieure un élément de renvoi (20), pour dévier le produit (12) se déplaçant vers le haut le long de la paroi (16), de telle sorte qu'il puisse retourner sur le fond (18), la paroi (16) pouvant être entraînée en rotation autour d'un axe de rotation (22) vertical, **caractérisé en ce que** dans la zone de transition de la paroi (16) à l'élément de renvoi (20), il y a au moins une première fente d'air (34, 36), et **en ce qu'**il y a un dispositif d'alimentation en air (38) pour l'amenée d'un courant d'air, la première fente d'air (34, 36) et/ou le dispositif d'alimentation en air (38) étant configurés de telle sorte que le courant d'air introduit par la fente d'air (34, 36) comporte une composante de l'écoulement dirigée essentiellement de bas en haut et, dans la zone se raccordant à la fente d'air (34, 36), essentiellement tangentiellement au tracé de la paroi (16) et/ou de l'élément de renvoi (20).

8. Dispositif selon la revendication 7, **caractérisé en ce que** dans la zone de transition de la paroi (16) à l'élément de renvoi (20), il y a au moins une deuxième fente d'air (34, 36) qui est écartée verticalement de la première fente d'air (34, 36), la deuxième fente d'air (34, 36) et/ou le dispositif d'alimentation en air (38) étant configurés de telle sorte qu'un courant d'air acheminé par le dispositif d'alimentation en air (38) comporte une composante de l'écoulement dirigée essentiellement de bas en haut et dans la zone se raccordant à la fente d'air (34, 36), une composante de l'écoulement dirigée essentiellement tangentiellement au tracé de la paroi (16) et/ou de l'élément de renvoi (20).

9. Dispositif selon la revendication 7 ou 8, **caractérisé en ce que** le dispositif d'alimentation en air (38) comporte un premier canal d'alimentation (40) pour l'amenée du premier courant d'air à la première fente d'air (34) et au moins un deuxième canal d'alimentation (42) séparé du premier canal d'alimentation (40) pour l'amenée d'un deuxième courant d'air à l'au moins une deuxième fente d'air (36).

10. Dispositif selon l'une des revendications 7 à 9, **caractérisé en ce que** l'élément de renvoi (20) comporte un premier tronçon (52) qui se raccorde directement à la paroi (16), sachant que la première fente d'air (34) existe entre une extrémité supérieure (28) de la paroi (16) et une extrémité inférieure (54) du premier tronçon (52).

11. Dispositif selon la revendication 10, **caractérisé en ce que** le premier tronçon (52) s'élargit de bas en haut avec une forme prenant la forme de la paroi (16) dans la zone de son extrémité supérieure (28).

12. Dispositif selon la revendication 10 ou 11, **caractérisé en ce que** le premier tronçon (52) ne tourne pas avec la paroi (16).

13. Dispositif selon la revendication 8 et l'une des revendications 10 à 12, **caractérisé en ce que** l'élément de renvoi (20) comporte au moins un deuxième tronçon (56) et **en ce que** la deuxième fente d'air (36) est disposée entre une extrémité supérieure (58) du premier tronçon (52) et une extrémité inférieure (60) du deuxième tronçon (56).

14. Dispositif selon la revendication 13, **caractérisé en ce que** le deuxième tronçon (56), vu depuis le milieu du récipient, est cintré de façon concave et **en ce que** l'extrémité inférieure (60) du deuxième tronçon (56) se raccorde continûment en forme à l'extrémité supérieure (58) du premier tronçon (52).

15. Dispositif selon la revendication 13 ou 14, **caractérisé en ce que** le deuxième tronçon (56) ne tourne pas avec la paroi (16).

16. Dispositif selon l'une des revendications 7 à 15, **caractérisé en ce que** l'élément de renvoi (20) est perméable à l'air sur une zone partielle qui suit l'au moins une première fente d'air ou le cas échéant au moins une deuxième fente d'air (34, 36).

17. Dispositif selon l'une des revendications 7 à 16, **caractérisé en ce que** la largeur de la première fente d'air et/ou le cas échéant de la deuxième fente d'air (34, 36) et/ou le débit d'air du point de vue de se pression et de son débit sont réglables.

18. Dispositif selon l'une des revendications 7 à 17, **caractérisé en ce que** des éléments de guidage réglables (66,68) sont disposés sur l'au moins une fente d'air (34, 36).

19. Dispositif selon l'une des revendications 7 à 18, **caractérisé en ce que** le fond (18) comporte au moins une fente d'air (88) et qu'ur dispositif d'alimentation en air (38) est prévu pour le fond (18), l'au moins une fente d'air (88) du fond (18) et/ou le dispositif d'alimentation en air (38) pour le fond (18) étant configurés de telle sorte que le courant d'air introduit par la fente d'air (88) du fond (18) comporte une composante essentiellement tangentielle par rapport au fond (18) et orientée vers la paroi (16).

20. Dispositif selon la revendication 19, **caractérisé en ce que** le fond (18) est constitué d'une pluralité d'éléments annulaires concentriques (82) avec des diamètres différents qui sont disposés de manière à se chevaucher en partie radialement les uns les autres et qui forment entre eux une pluralité de fentes d'air (88).

21. Dispositif selon la revendication 19 ou 20, **caractérisé en ce que** la largeur de l'au moins une fente d'air (88) du fond (18) est réglable.

22. Dispositif selon l'une des revendications 19 à 21, **caractérisé en ce que** l'au moins une fente d'air (88) du fond (18) s'ouvre d'elle-même quand elle est soumise au courant d'air et se réduit d'elle-même ou se ferme quand le courant d'air diminue ou est coupé.

23. Dispositif selon l'une des revendications 19 à 22, **caractérisé en ce que** le fond (18) comporte des éléments de guidage de l'air qui confèrent en plus au courant d'air introduit par au moins une fente d'air (88) du fond (18) une composante d'écoulement dirigée dans le sens de rotation de la paroi (16).

24. Dispositif selon l'une des revendications 19 à 23, **caractérisé en ce que** le fond (18) ne tourne pas avec la paroi (16).

25. Dispositif selon l'une des revendications 7 à 24, **caractérisé en ce que** le récipient (14) comporte une surface de retour (30) qui se rétrécit de haut en bas, sur laquelle le produit (12) dévié par l'élément de renvoi (20) est redéplacé vers le bas en direction du fond (18).

26. Dispositif selon la revendication 25, **caractérisé en ce que** la surface de retour (30) est appuyée sur la paroi (16) par l'intermédiaire d'un palier à anneau glissant (100), de telle sorte qu'elle ne tourne pas ou seulement peu avec la paroi (16).

27. Dispositif selon la revendication 25 ou 26, **caractérisé en ce que** la surface de retour (30) est constituée d'une pluralité d'éléments annulaires concentriques (94) qui se chevauchent en partie les uns les autres et qui forment entre eux une pluralité de fentes d'air (96).

28. Dispositif selon la revendication 27, **caractérisé en ce que** les fentes d'air (36) de la surface de retour (30) sont configurées de telle sorte qu'un courant d'air introduit à travers eux comporte une composante d'écoulement orientée de haut en bas et essentiellement parallèlement au tracé de la surface de retour (30).

29. Dispositif selon l'une des revendications 7 à 28, **caractérisé en ce qu'**un dispositif de pulvérisation (32) est disposé dans le récipient (14) pour enduire par pulvérisation le produit (12) d'un milieu de revêtement humide, dispositif qui comporte un gicleur à fente annulaire (102), sachant que le gicleur (102) est disposé verticalement dans le récipient (14) et que l'alimentation en le milieu de revêtement et en l'air de pulvérisation dans le gicleur (102) s'effectue de bas en haut et que le gicleur (102) est soumis depuis le haut à un courant d'air supplémentaire.
